# EUROPEAN PATENT APPLICATION

(11) **EP 4 120 452 A1**
(43) Date of publication of application: **18.01.2023**
(21) Application number: 21195418.5
(22) Date of filing: 08.09.2021
(51) Int. Cl.: H01M 50/20

(54) **BATTERY APPARATUS**

(30) Priority: 16.07.2021 CN 202121636031 U
(71) Applicant: CALB Co., Ltd., Changzhou City, Jiangsu Province (CN)
(72) Inventor: ZHAO, Dong, Changzhou City (CN)
(74) Representative: Becker, Eberhard

(57) **Abstract**

A battery apparatus includes a main body (10) having a first connection portion (11) and a second connection portion (12) and an output end protective support (20) having a first fitting connection portion (21) and a second fitting connection portion (22). The first connection portion (11) is engaged with the first fitting connection portion (21), and the second connection portion (12) is engaged with the second fitting connection portion (22). The first and second fitting connection portions (21, 22) are not disposed on a same side of the output end protective support (20). The first fitting connection portion (21) includes a rigid piece or a plastic piece, and at least one of the second connection portion (12) and the second fitting connection portion (22) includes an elastic piece.

## Description

### BACKGROUND

### Technical Field

The disclosure relates to the technical field of batteries, and in particular, relates to a battery apparatus.

### Description of Related Art

In the related art, the output end protective support of a harness plate apparatus is fixedly connected to a battery module by means of interference fitting. However, connection performed through interference fitting is not reliable, and the amount of interference in the manufacturing process is not easy to control. Further, the output end protective support is easy to be loosened, and thus the performance of the harness plate apparatus is affected.

### SUMMARY

The disclosure provides a battery apparatus.

In an aspect of the disclosure, a battery apparatus is provided. The battery apparatus includes a main body and an output end protective support. The main body has a first connection portion and a second connection portion. The output end protective support has a first fitting connection portion and a second fitting connection portion. The first connection portion is engaged with the first fitting connection portion, and the second connection portion is engaged with the second fitting connection portion. The first fitting connection portion and the second fitting connection portion are not disposed on a same side of the output end protective support. The first fitting connection portion includes a rigid piece or a plastic piece, and at least one of the second connection portion and the second fitting connection portion includes an elastic piece.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a partial schematic view of a structure of a battery apparatus according to an embodiment of the disclosure.
FIG. 2 is a partial schematic view of an end portion of the battery apparatus according to an embodiment of the disclosure.
FIG. 3 is a schematic view of a structure of an output end protective support of the battery apparatus from a first viewing angle according to an embodiment of the disclosure.
FIG. 4 is a schematic view of the structure of the output end protective support of the battery apparatus from a second viewing angle according to an embodiment of the disclosure.
FIG. 5 is a schematic view of a state of assembly of the output end protective support and an end plate according to an embodiment of the disclosure.
FIG. 6 is a schematic view of another state of assembly of the output end protective support and the end plate according to an embodiment of the disclosure.
FIG. 7 is a schematic view of a state of completed assembly of the output end protective support and the end plate according to an embodiment of the disclosure.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

In a battery apparatus, an output end protective support is used to protect output end and a signal acquisition output end of a busbar, to ensure reliability of the output ends. In the disclosure, one end of the output end protective support is provided with an elastic piece engaged with the battery apparatus, and the other end of the output end protective support is provided with a rigid piece or a plastic piece engaged with the battery apparatus, such that the assembly is conveniently performed, and the output end protective support is ensured to be securely fixed, and that the performance of the battery apparatus is improved.

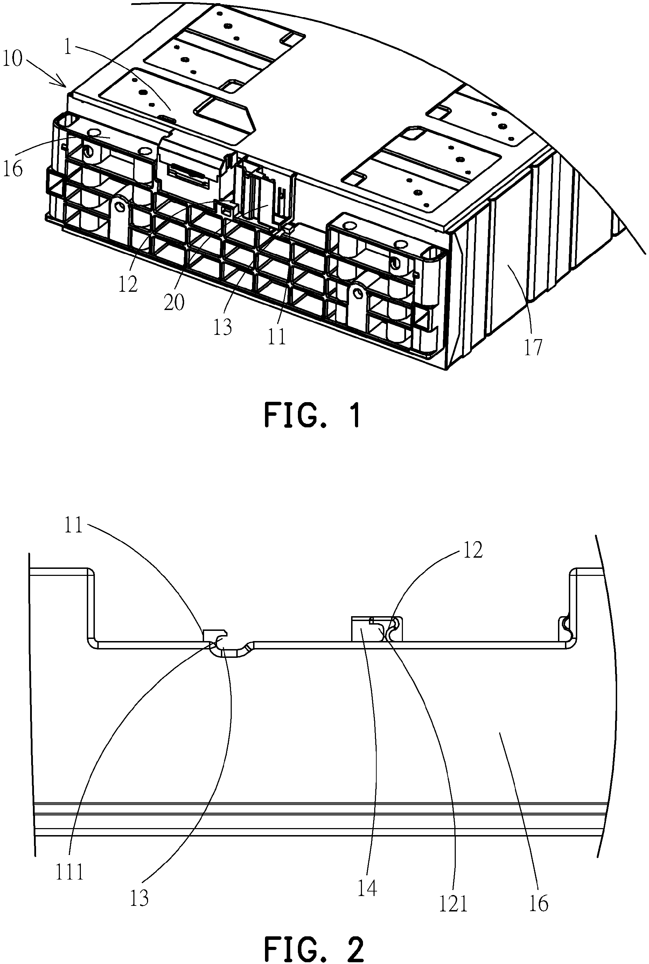

As shown in FIG. 1, a battery apparatus includes a harness plate apparatus 1, and a conductive member is provided on the harness plate apparatus 1. The conductive member is provided with an output end for transmitting electricity or electric signals to outside of the battery apparatus. The battery apparatus includes an output end protective support 20, the output end protective support 20 is provided with a protective chamber, and the protective chamber may be used for accommodating an output end of the conductive member of the battery apparatus.

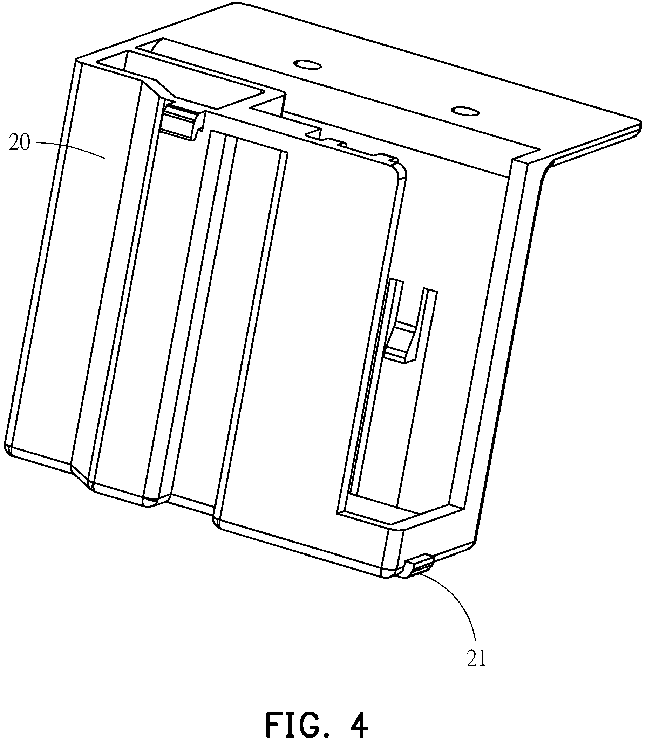

In an embodiment of the disclosure, as shown in FIG. 1 to FIG. 4, the battery apparatus includes a main body 10, and the main body 10 has a first connection portion 11 and a second connection portion 12. The output end protective support 20 has a first fitting connection portion 21 and a second fitting connection portion 22. The first connection portion 11 is engaged with the first fitting connection portion 21, the second connection portion 12 is engaged with the second fitting connection portion 22, and in this way, the output end protective support 20 is fixedly connected to the main body 10 of the battery apparatus.

To be specific, the first connection portion 11 may be provided with a protrusion, and the first fitting connection portion 21 may be provided with a recess. Alternatively, the first connection portion 11 may be provided with a recess, and the first fitting connection portion 21 may be provided with a protrusion. Engagement between the first connection portion 11 and the first fitting connection portion 21 may be accomplished through engagement and fitting between the protrusion and the recess. The protrusion may be a hook, etc.

Specific implementation of engagement between the second connection portion 12 and the second fitting connection portion 22 may be identical to or may be different from that between the first connection portion 11 and the first fitting connection portion 21, which is not particularly limited herein.

In other embodiments, the first fitting connection portion 21 and the output end protective support 20 may form an integral structure or may form a split structure, and the second fitting connection portion 22 and the output end protective support 20 form an integral structure or may form a split structure. Preferably, the first fitting connection portion 21 and the output end protective support 20 form an integral structure, and the second fitting connection portion 22 and the output end protective support 20 form an integral structure. In this way, processing is conveniently performed, and the connection strength of the first fitting connection portion 21, the second fitting connection portion 22 and the output end protective support 20 is guaranteed.

In some embodiments, each of the first connection portion 11 and the first fitting connection portion 21 includes a rigid piece or a plastic piece, and at least one of the second connection portion 12 and the second fitting connection portion 22 includes an elastic piece. The rigid piece or the plastic piece refer to a component that is not deformed when being applied by an external force, cannot be restored after deformation, or exhibits only minor deformation. By configuring each of the first connection portion 11 and the first fitting connection portion 21 as a rigid piece or a plastic pieced, it can be ensured that the two maintain their original states when being engaged with each together, such that the output end protective support 20 is stably fixed to the battery apparatus. However, in this case, the output end protective support 20 may not be easily engaged into the main body 10 of the battery apparatus, so herein, at least one of the second connection portion 12 and the second fitting connection portion 22 is configured as an elastic piece.

To be specific, implementation may be made in three ways. First, the second connection portion 12 may be provided with an elastic piece, and the second fitting connection portion 22 may be provided with a non-elastic piece. Second, the second connection portion 12 may be provided with a non-elastic piece, and the second fitting connection portion 22 may be provided with an elastic piece. Third, both the second connection portion 12 and the second fitting connection portion 22 may be provided with elastic pieces. The elastic piece may be deformed when being applied by an external force, and when the main body 10 of the battery apparatus applies an elastic limiting force on the elastic piece, the output end protective support 20 and the main body 10 of the battery apparatus may be smoothly engaged with each other.

In the case that one end of the output end protective support 20 is provided with an elastic piece and the other end of the output end protective support 20 is provided with a rigid piece or a plastic piece to be engaged with the battery apparatus, assembly may be conveniently performed, and the output end protective support 20 is also ensured to be securely fixed. As such, the output end protective support 20 and the battery apparatus may be securely engaged without causing an engagement failure problem in such an engagement structure, and thus reliability of the engagement structure is improved.

It is noted that, the first fitting connection portion 21 and the second fitting connection portion 22 are not disposed on a same side of the output end protective support 20. That is, the first fitting connection portion 21 and the second fitting connection portion 22 are disposed on two sides of the output end protective support 20, and in this way, the output end protective support 20 and the main body 10 are reliably connected. In this embodiment, the first fitting connection portion 21 and the second fitting connection portion 22 are located on two opposite sides of the output end protective support 20, and in this way, the output end protective support 20 is engaged between the first connection portion 11 and the second connection portion 12, and thus the output end protective support 20 is prevented from being detached.

In other embodiments, as shown in FIG. 1, the main body 10 of the battery apparatus includes an end plate 16, and at least one of the first connection portion 11 and the second connection portion 12 may be disposed on the end plate 16. Preferably, both the first connection portion 11 and the second connection portion 12 are disposed on the end plate 16. Besides, the end plate 16 is formed by die-casting. The end plate 16 formed by die-casting has higher structural strength and lighter weight, which ensures the battery apparatus to be securely fixed and improves energy density of the battery apparatus. Since the end plate 16 has a higher structural strength and is located at the end portion of the battery apparatus, an accommodation space is provided for the output end protective support 20, such that the fixed strength of the output end protective support 20 is ensured without occupying space.

Herein, the first connection portion 11 may be a separate member, may be fixed onto the end plate 16 through a fixing method such as welding or gluing, or may form an integral structure together with the end plate 16. Further, the second connection portion 12 may also be a separate member or may be fixed onto the end plate 16 through a fixing method such as welding or gluing, or the second connection portion 12 may form an integral structure together with the end plate 16. Preferably, the first connection portion 11 and the end plate 16 form an integral structure, and the second connection portion 12 and the end plate 16 form an integral structure as well. By integrally forming the first connection portion 11 and the second connection portion 12 with the end plate 16, processing steps such as welding and gluing are reduced. Moreover, the connection strength among the first connection portion 11, the second connection portion 12 and the end plate 16 is improved, and this ensures the fixed strength of the output end protective support 20.

In some embodiments, as shown in FIG. 2, the main body 10 of the battery apparatus is provided with an avoiding groove 13. When the second fitting connection portion 22 of the output end protective support 20 is elastically engaged with the second connection portion 12, such an engagement process may be interfered by other portions of the main body 10 of the battery apparatus. Herein, the main body 10 of the battery apparatus is required to provide an avoiding space for the output end protective support 20 to avoid the output end protective support 20, and to further ensure that the engagement process is smoothly completed. After the output end protective support 20 and the main body 10 of the battery apparatus are connected in place, at least a portion of the output end protective support 20 which is avoided in the avoiding groove 13 is detached from the avoiding groove 13. The avoiding groove 13 may be disposed on the end plate 16 and may also be disposed on other members of the battery apparatus, and the main purpose is to ensure that there is no interference in the elastic engagement process of the output end protective support 20 and the first connection portion 11.

In other embodiments, as shown in FIG. 2, the avoiding groove 13 is disposed on the end plate 16, and the first connection portion 11 is also disposed on the end plate 16. Herein, a first engagement groove 111 may be formed between the first connection portion 11 and a plane where an opening of the avoiding groove 13 is located, and the first fitting connection portion 21 is engaged in the first engagement groove 111. Herein, the first engagement groove 111 may communicate with the avoiding groove 13. During a formation process, by communicating the first engagement groove 111 with the avoiding groove 13, only one groove can simultaneously realize engagement and avoiding of the output end protective support 20, thus the process complexity is lowered.

In other embodiments, the second fitting connection portion 22 is an elastic piece, and the second connection portion 12 may be an elastic piece or may be a non-elastic piece. The elastic piece may be a plastic piece or a metal sheet, which is not limited herein. Generally, in order to ensure insulation performance of the output end protective support 20 when the output end protective support 20 is connected to the conductive member, the output end protective support 20 is generally made of a plastic piece, and the elastic piece may be easily matched with the output end protective support 20. When the elastic piece may be a plastic piece, the elastic piece may be separately processed and formed before being connected to the output end protective support 20, or the elastic piece may be integrally formed with the output end protective support 20. When the elastic piece may be a metal piece, the elastic piece may be fused and fixed when the output end protective support 20 is processed and formed. Preferably, in an extending direction of the conductive member, the second fitting connection portion 22 is located at a middle portion of the output end protective support 20, such that the output end protective support 20 may receive a force in a balanced manner.

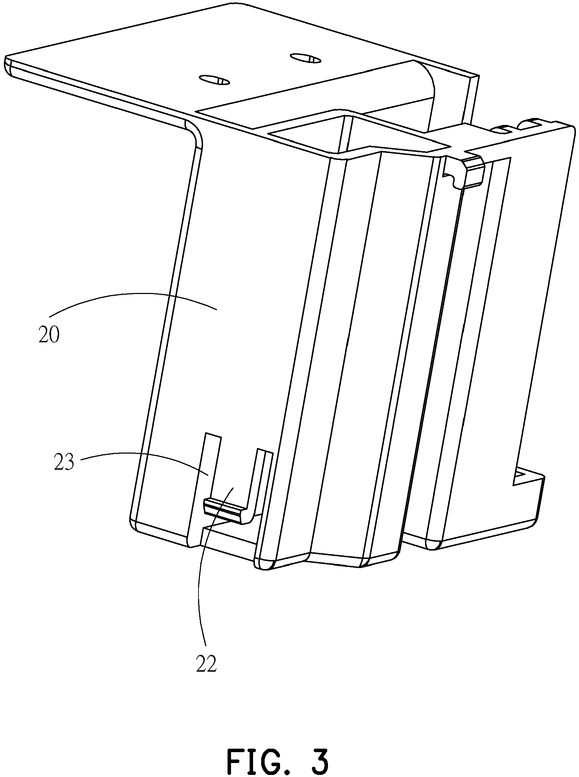

Further, as shown in FIG. 3, the second fitting connection portion 22 is a cantilever piece. Because an arm of the cantilever piece is longer, the cantilever piece itself may be deformed to a certain extent when being applied by an external force. Especially when the second fitting connection portion 22 is a plastic piece, the second fitting connection portion 22 is ensured to be deformed without the arrangement of an elastic structure, and the engagement between the output end protective support 20 and the main body 10 is also ensured. Preferably, an extending direction of the cantilever piece is close to the output end protective support 20, and in this way, a length of the cantilever piece is prevented from occupying a space of the battery apparatus since the arm of the cantilever is longer. Besides, the second fitting connection portion 22 may be deformed towards one side close to the output end protective support 20 when being applied by an external force, such that after the second fitting connection portion 22 is engaged with the second connection portion 12, the second fitting connection portion 22 may occupy less space in the battery apparatus structure. Preferably, the second fitting connection portion 22 and the output end protective support 20 are integrally formed as one piece. Herein, the output end protective support 20 is provided with a notch 23, and the second fitting connection portion 22 is located in the notch 23. Two side walls of the notch 23 are respectively spaced apart from two sides of the second fitting connection portion 22, such that the second fitting connection portion 22 acts as a cantilever piece. Herein, a cantilever piece for forming the second fitting connection portion 22 is not required to be separately provided, and process complexity is decreased in this way. A thickness of a bottom wall of the notch 23 is identical to a thickness of at least a portion of the second fitting connection portion 22.

In other embodiments, a number of the second connection portion 12 and a number of the second fitting connection portion 22 may be one or may be at least two. When each of the numbers of the second connection portion 12 and the second fitting connection portion 22 is one, preferably, in the extending direction of the conductive member, the cantilever piece is located on the middle portion of the output end protective support 20, such that the output end protective support 20 receives a force in a balanced manner. When each of the numbers of the second connection portion 12 and the second fitting connection portion 22 is at least two, in the extending direction of the conductive member, two of the cantilever pieces may be separately disposed on two ends of the output end protective support 20, so as to further improve the stability of the output end protective support 20. Besides, a specific size of the cantilever piece may be appropriately designed according to the required elastic limiting force.

In other embodiments, the cantilever piece is further provided with a reinforcing rib configured to strengthen structural strength of the cantilever piece. That is, when the second connection portion 12 is connected to the second fitting connection portion 22, the reinforcing rib is used to prevent the cantilever piece from breaking and causing the fixing effect to fail. In some embodiments, one end of the cantilever piece is provided with a hook, and the hook is configured to be engaged with and connected to the second connection portion 12, and in this way, processing is conveniently performed and connecting strength is guaranteed. In some embodiments, one end of the cantilever piece is provided with a slot or a through hole, and the second connection portion 12 is engaged with and connected to the slot or the through hole.

In some embodiments, the second connection portion 12 is a cantilever piece, and the second fitting connection portion 22 may be a rigid piece or a plastic piece. The specific connection manner in which the second connection portion 12 acts as a cantilever piece is not limited herein, and description thereof may be found with reference to the implementation in which the second fitting connection portion 22 acts as a cantilever piece.

Optionally, the second connection portion 12 and the second fitting connection portion 22 may both be cantilever pieces, so as to facilitate the connection of the second connecting portion 12 and the second fitting connection portion 22.

It is noted that the elastic piece may be a rubber structure, a spring structure, a cantilever structure, or the like. For instance, the elastic piece may be a circumferential engagement structure, which may be made of a rubber structure, a spring structure, or a cantilever structure.

The cantilever piece may be a rubber sheet, for example, the second fitting connection portion 22 may be a rubber sheet, and a hook is disposed on the rubber sheet. Through the deformation of the rubber sheet, the second fitting connection portion 22 may be installed on the second connection portion 12. After installation and positioning, the rubber sheet restores to an original state, at this time, engagement between the hook and the second connection portion 12 is achieved. Alternatively, the cantilever piece may be a metal sheet, for example, a straight arm buckle, an L-shaped buckle, a U-shaped buckle, etc., which is not limited herein as long as the cantilever piece may generate elastic deformation. In some embodiments, the cantilever piece may also be a spring-type cantilever structure.

In other embodiments, as shown in FIG. 2, the second connection portion 12 and the main body 10 of the battery apparatus form a second engagement groove 121, and when the second connection portion 12 is disposed on the end plate 16, the second engagement groove 121 is located on the end plate 16 as well. Herein, the first connection portion 11 and the second connection portion 12 are both engaged with the output end protective support 20. The first fitting connection portion 21 and the second fitting connection portion 11 are non-elastically limited and are difficult to be installed, while the second fitting connection portion 22 and the second connection portion 12 are elastically limited. Therefore, during installation, the first fitting connection portion 21 and the first connection portion 11 may be assembled and connected by the elastic limiting effect between the second fitting connection portion 22 and the second connection portion 12. To be specific, when the first connection portion 11 and the first fitting connection portion 21 are pre-connected, the output end protective support 20 moves relative to the main body 10 of the battery apparatus after being applied by an external force. The second connection portion 12 drives the second fitting connection portion 22 to be deformed until the second fitting connection portion 22 is engaged in the second engagement groove 121. Further, connection between the first connection portion 11 and the first fitting connection portion 21 is changed from pre-connection to engagement connection. Through the foregoing structure, the output end protective support 20 and the battery apparatus have greater engagement strength without causing an engagement failure problem of the engagement structure, and thus reliability of the engagement structure is improved.

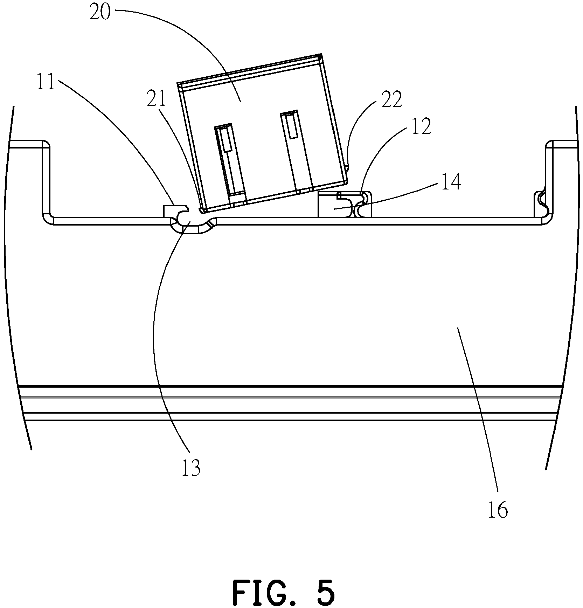

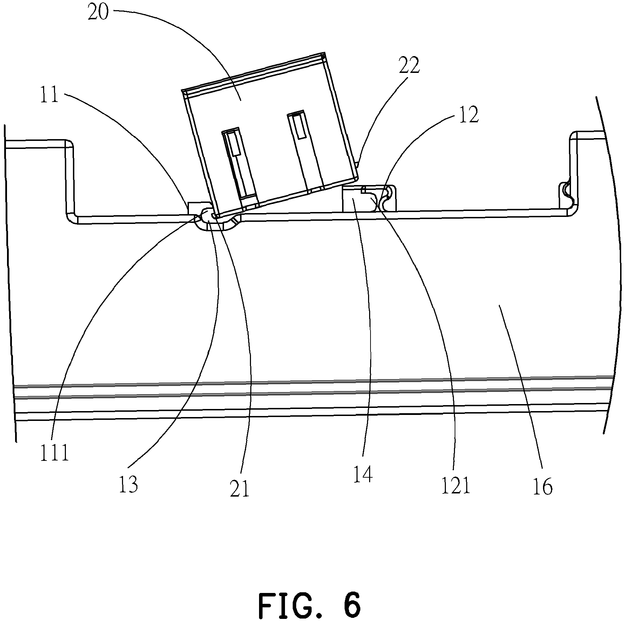

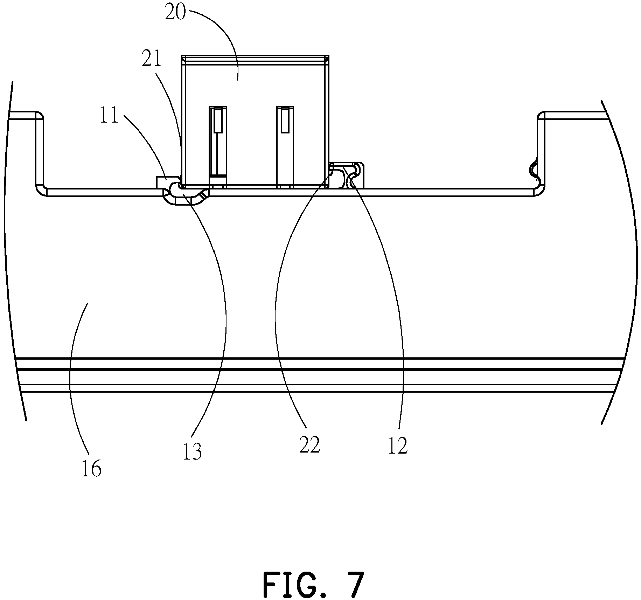

As shown in FIG. 5, when the output end protective support 20 is installed on the end plate 16, the output end protective support 20 is disposed in an inclined manner, such that one end of the output end protective support 20 may be conveniently inserted into the avoiding groove 13, that is, the structure shown in FIG. 6 is formed. Herein, one end of the output end protective support 20 having the first fitting connection portion 21 is inserted into the avoiding groove 13. One end of the output end protective support 20 is first inserted into a non-elastic fixing portion on the end plate 16, to limit the one end of the output end protective support 20 in vertical and horizontal directions, that is, pre-connection is formed between the first fitting connection portion 21 and the first connection portion 11. Next, the output end protective support 20 is pressed down, so that the other end of the output end protective support 20 is engaged with the end plate 16 through elastic engagement, that is, the second fitting connection portion 22 is engaged with the second connection portion 12, and the first fitting connection portion 21 is engaged with the first connection portion 11, as specifically shown in FIG. 7.

In other embodiments, a number of the first connection portion 21 and a number of the first fitting connection portion 11 may be one or may be at least two. When each of the numbers of the first connection portion 11 and the first fitting connection portion 21 is one, preferably, in the extending direction of the conductive member, the first fitting connection portion 21 is located on the middle portion of the output end protective base 20, such that the output end protective support 20 receives a force in a balanced manner. When each of the numbers of the first fitting connection portion 21 and the first connection portion 11 is at least two, in the extending direction of the conductive member, two of the first fitting connection portions 21 may be separately disposed on two ends of the output end protective support 20, so as to further improve the stability of the output end protective support 20.

In other embodiments, two output end protective supports 20 may be provided. Herein, the second connection portion 12 may further include a third engagement groove. The second engagement groove is configured to be engaged with and connected to one of the output end protective supports 20, and the third engagement groove is configured to be engaged with and connected to the other one of the output end protective supports 20. The second connection portion 12 is sandwiched between the two output end protective supports 20, and the second engagement groove and the third engagement groove are arranged opposite to each other. To be specific, one of the output end protective supports 20 may be a high-voltage output end protective support, and the high-voltage output end protective support 20 is configured to protect an output end of a busbar. It is noted that the busbar is configured to transmit the electricity of the battery apparatus to the outside of the battery apparatus. The other one of the output end protective supports 20 may be a low-voltage output end protective support, and the low-voltage output end protective support is configured to protect an output end of a signal acquisition line. It is noted that the signal acquisition line is configured to transmit a temperature and other parameters of the battery apparatus to the outside of the battery apparatus in a form of electrical signals. In some embodiments, the output end of the signal acquisition line further includes a low-voltage connector, and the low-voltage connector is disposed on the output end protective support 20. In addition, in other embodiments, three or more output end protective supports 20 may be provided, and in this case, the second connection portion 12 may include a fourth engagement groove, a fifth engagement groove, and so on, which is not specifically limited herein. Through the above design, fixing of two or more output end protective supports 20 may be achieved at the same time through the second connection portion 12, and in this way, less components are required to be installed, and space utilization is improved.

In some embodiments, two output end protective supports 20 may be engaged with one first connection portion 11 together, and the first connection portion 11 is sandwiched between the two output end protective supports 20.

Further, as shown in FIG. 5 to FIG. 7, the main body 10 may be further provided with a limiting portion 14. That is, the end plate 16 is provided with the limiting portion 14, and the limiting portion 14 is disposed on one side of the second connection portion 12. To be specific, the limiting portion 14 extends in a width direction of the output end protective support 20 and is connected to the output end protective support 20, so as to limit the output end protective support 20 in an arranging direction of the battery apparatus.

In other embodiments, the output end protective support 20 includes a protective cover and a protective bottom base. The first fitting connection portion 21 and the second fitting connection portion 22 are both disposed on the protective bottom base. The protective cover is installed on the protective bottom base through the engagement structure. The protective cover and the protective bottom base are enclosed to form the protective chamber for accommodating an output end, and the output end of the conductive member is arranged inside the protective chamber to ensure the safety of the output end. In this way, safety accidents caused by the short circuit of the output end of the battery apparatus may be reduced and avoided, and the safety of the battery apparatus may be improved.

Optionally, the first connection portion 11 may also include an elastic member, that is, both ends of the output end protective support 20 and the main body 10 are connected through elastic connection. For instance, the first connection portion 11 and the second connection portion 12 both include elastic pieces, and the first fitting connection portion 21 and the second fitting connection portion 22 both include plastic pieces or rigid pieces. Therefore, only the first fitting connection portion 21 is required to include a plastic piece or a rigid piece, and only at least one of the second connection portion 12 and the second fitting connection portion 22 is required to include an elastic piece.

In the embodiments of the disclosure, the battery apparatus may a battery module or a battery pack. Herein, the battery module includes a plurality of batteries, the end plate 16, and a side plate 17, and the end plate 16 and the side plate 17 are configured to secure the plurality of batteries, as shown in FIG. 1. The battery pack includes the plurality of batteries and a battery box, and the battery box is configured to secure the batteries.

It is noted that, in some embodiments, it is not excluded that the first connection portion 11 and the second connection portion 12 are both disposed on the side plate 17, that is, the output end protective support 20 is engaged on the side plate 17.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery apparatus, comprising:
a main body (10), having a first connection portion (11) and a second connection portion (12); and
an output end protective support (20), having a first fitting connection portion (21) and a second fitting connection portion (22), wherein the first connection portion (11) is engaged with the first fitting connection portion (21), the second connection portion (12) is engaged with the second fitting connection portion (22), and the first fitting connection portion (21) and the second fitting connection portion (22) are not disposed on a same side of the output end protective support (20);
wherein the first fitting connection portion (21) includes a rigid piece or a plastic piece, and at least one of the second connection portion (12) and the second fitting connection portion (22) includes an elastic piece.

2. The battery apparatus according to claim 1, wherein the first fitting connection portion (21) and the second fitting connection portion (22) are disposed on two opposite sides of the output end protective support (20).

3. The battery apparatus according to claim 1, wherein at least one of the second fitting connection portion (22) and the second connection portion (12) is a cantilever piece.

4. The battery apparatus according to claim 3, wherein the output end protective support (20) has a notch (23), the second fitting connection portion (22) is located in the notch (23), and two side walls of the notch (23) are spaced apart from two sides of the second fitting connection portion (22), such that the second fitting connection portion (22) acts as a cantilever piece.

5. The battery apparatus according to claim 4, wherein a thickness of a bottom wall of the notch (23) is identical to a thickness of at least a portion of the second fitting connection portion (22).

6. The battery apparatus according to any one of claims 1-5, wherein the main body (10) includes an end plate (16), and the first connection portion (11) and the second connection portion (12) are disposed on the end plate (16).

7. The battery apparatus according to claim 6, wherein the first connection portion (11) and the end plate (16) form an integral structure, and the second connection portion (12) and the end plate (16) form an integral structure.

8. The battery apparatus according to any one of claims 1-5, wherein the main body (10) has an avoiding groove (13), a first engagement groove (111) is formed between the first connection portion (11) and a plane where an opening of the avoiding groove (13) is located, and the first fitting connection portion (21) is engaged in the first engagement groove (111), and
the avoiding groove (13) communicates with the first engagement groove (111).

9. The battery apparatus according to any one of claims 1-5, wherein the second connection portion (12) and the main body (10) form a second engagement groove (121), and
after the first connection portion (11) and the first fitting connection portion (21) are pre-connected, the output end protective support (20) moves relative to the main body (10) under an action of an external force, the second connection portion (12) drives the second fitting connection portion (22) to deform until the second fitting connection portion (22) is engaged in the second engagement groove (121), and a connection between the first connection portion (11) and the first fitting connection portion (21) is changed from pre-connection to engagement connection.

10. The battery apparatus according to any one of claims 1-5, wherein the first fitting connection portion (21) and the output end protective support (20) form an integral structure, and the second fitting connection portion (22) and the output end protective support (20) form an integral structure.

11. The battery apparatus according to any one of claims 1-5, wherein the battery apparatus is a battery module or a battery pack.

## Amended claims

### Amended claims in accordance with Rule 137(2) EPC.

1. A battery apparatus, comprising:
a main body (10), having a first connection portion (11) and a second connection portion (12), wherein each of the first connection portion (11) and the second connection portion (12) is provided with a recess; and
an output end protective support (20), having a first fitting connection portion (21) and a second fitting connection portion (22), wherein each of the first fitting connection portion (21) and the second fitting connection portion (22) is provided with a protrusion, the first connection portion (11) is engaged with the first fitting connection portion (21), the second connection portion (12) is engaged with the second fitting connection portion (22), the first fitting connection portion (21) and the second fitting connection portion (22) are not disposed on a same side of the output end protective support (20), the first fitting connection portion (21) and the second fitting connection portion (22) are disposed on two opposite sides of the output end protective support (20), and the output end protective support (20) is engaged between the first connection portion (11) and the second connection portion (12);
wherein the first fitting connection portion (21) includes a rigid piece or a plastic piece, and at least one of the second connection portion (12) and the second fitting connection portion (22) includes an elastic piece,
the main body (10) has an avoiding groove (13) recessed in a surface of the main body (10), the first connection portion (11) has a first engagement groove (111) facing the avoiding groove (13), and the first engagement groove (111) is formed between the first connection portion (11) and a plane where an opening of the avoiding groove (13) is located, and the first fitting connection portion (21) is inserted into the avoiding groove (13), and is engaged in the first engagement groove (111), and the avoiding groove (13) communicates with the first engagement groove (111).

2. The battery apparatus according to claim 1, wherein at least one of the second fitting connection portion (22) and the second connection portion (12) is a cantilever piece.

3. The battery apparatus according to claim 2, wherein the output end protective support (20) has a notch (23), the second fitting connection portion (22) is located in the notch (23), and two side walls of the notch (23) are spaced apart from two sides of the second fitting connection portion (22), such that the second fitting connection portion (22) acts as a cantilever piece.

4. The battery apparatus according to claim 3, wherein a thickness of a bottom wall of the notch (23) is identical to a thickness of at least a portion of the second fitting connection portion (22).

5. The battery apparatus according to any one of claims 1-4, wherein the main body (10) includes an end plate (16), and the first connection portion (11) and the second connection portion (12) are disposed on the end plate (16).

6. The battery apparatus according to claim 5, wherein the first connection portion (11) and the end plate (16) form an integral structure, and the second connection portion (12) and the end plate (16) form an integral structure.

7. The battery apparatus according to any one of claims 1-4, wherein the second connection portion (12) and the main body (10) form a second engagement groove (121), and
after the first connection portion (11) and the first fitting connection portion (21) are pre-connected, the output end protective support (20) moves relative to the main body (10) under an action of an external force, the second connection portion (12) drives the second fitting connection portion (22) to deform until the second fitting connection portion (22) is engaged in the second engagement groove (121), and a connection between the first connection portion (11) and the first fitting connection portion (21) is changed from pre-connection to engagement connection.

8. The battery apparatus according to any one of claims 1-4, wherein the first fitting connection portion (21) and the output end protective support (20) form an integral structure, and the second fitting connection portion (22) and the output end protective support (20) form an integral structure.

9. The battery apparatus according to any one of claims 1-4, wherein the battery apparatus is a battery module or a battery pack.
